# EUROPEAN PATENT SPECIFICATION

(11) **EP 3 372 918 B1**
(45) Date of publication and mention of the grant of the patent: **26.11.2025**
(21) Application number: 16805533.3
(22) Date of filing: 25.10.2016
(51) Int. Cl.: F24S 25/10

(54) **SOLAR ENERGY DISPOSITION**
SOLARENERGIEANORDNUNG
AGENCEMENT D'ÉNERGIE SOLAIRE

(30) Priority: 25.10.2015 PT 15108909
(43) Date of publication of application: 12.09.2018
(73) Proprietor: Teixeira e Silva Cardoso, Paulo Alexandre, 1990-237 Lisboa (PT)
(72) Inventor: Teixeira e Silva Cardoso, Paulo Alexandre, 1990-237 Lisboa (PT)
(74) Representative: Liebl, Thomas
(86) International application number: PCT/PT2016/000013
(87) International publication number: WO 2017/074209

(56) References cited:
- WO-A1-2009/142524
- WO-A1-2014/070032
- WO-A1-2014/073999
- FR-A1- 3 014 925
- US-A1- 2011 023 938
- US-A1- 2011 250 015
- US-A1- 2012 167 960
- US-A1- 2014 233 127

## Description

### Field of the invention

The present invention refers to the field of solar energy dispositions comprising a plurality of different individual support structures presenting solar energy means.

### Background of the invention

There are known several solutions in prior art relating to solar energy arrangements presenting several structures arranged adjacent to each other, generally in successive lines developing in a parallel manner relative to each other and transversally relative to a prevailing solar direction, whereby the surfaces of solar energy conversion are inclined along a favourable angle. In this type of dispositions, there is provided spacing between successive lines so as to avoid shadowing of a line by the next line.

Document US 2012/0304552 A1 discloses a canopy-like structure that presents a single support element provided as a pole-like element with several support elements disposed in mutually diverging manner starting from a zone of proximity. This solution is complex and expensive. The document proposes a particular solution for an inclined rectangular canopy, including some elements as support beams under support loading and other as rods under tension loading. Moreover, the support elements are provided with a different configuration. Moreover, this solution is only appropriate for canopies with a given shape and dimension.

Document US 2015/113987 A1 discloses an integrated renewable energy system that presents a plurality of structures comprising canopy-like top elements presenting solar energy means, whereby said structures are distributed in a given confined utility space.

Document FR 3014925 A1 discloses a single individual support structure consisting of a single top element presenting a plurality of solar energy means. Said solar energy means are arranged adjacent to each other at a similar height next to each other in a regular matrix disposition.

Document WO 2014/073999 A1 discloses a distributed infrastructure comprising a plurality of individual superstructures of the type of the present invention, whereby said individual structures may present support elements of different height and top elements of different dimensions and shapes.

US 2014/233127 A1 discloses a solar energy disposition according to the preamble of claim 1.

The use of individual structures, as alternative to a single structure, presents several advantages including structural efficiency and modularity.

The documents in the prior art generally aim at optimizing the configuration of individual structures adapted for supporting canopy-like, or similar, parts comprising solar energy means, and not the ensemble of individual structures and respective disposition in a given utility space.

Moreover, the documents in prior art do not consider constrains associated with the area of a utility space that is effectively available for solar energy generation, such as for example by motive of shadowing of part of the total area, thereby resulting the need of maximizing the use of the effectively available area for solar energy generation in said utility space.

### General description of the invention

A first objective of the present invention is to provide a solar energy disposition comprising a plurality of individual support structures, adapted so that it enables a maximization of the solar energy generation potential in said utility space, at least in view of different dimensions, spatial configurations and orientations of the area available for solar energy generation on said utility space, in the best conditions of use of said available area and associated benefits, such as for example shadowing and reduction of wind loads upon individual support structures.

The aforementioned objective is solved according to the present invention by means of a solar energy disposition according to claim 1.

It is preferred when at least part of said individual support structures of said solar energy disposition provides a total area of solar energy means that is bigger than 90%, preferentially similar to 100%, particularly preferentially bigger than 100%, of the total area confining the vertical projection of said top elements.

It is preferred when at least part of said individual support structures of said solar energy disposition presents a variation of at least one parameter including average height, intercalary average distance, area, inclination angles and porosity of the top elements, in particular in at least part of said utility space.

It is preferred when said disposition comprises at least a first prevailing alignment of individual support structures, defined by at least two neighbouring individual support structures disposed along a first spatial direction. It is preferred when said disposition comprises at least a second prevailing alignment defined by at least two individual support structures along a second spatial direction, whereby the successive first and second spatial directions are substantially parallel or define an angle in-between.

It is preferred when said disposition presents a configuration including at least one type of cluster of individual support structures.

It is preferred when said disposition comprises individual support structures disposed so that respective top elements provide substantially adjacent areas in at least part of said utility space.

It is preferred when said top elements present a general shape of polygonal type, preferentially of trapezoidal type.

It is preferred when at least two of said individual support structures present top elements that develop in at least one of at different levels along a substantially horizontal plane, and along different planes.

It is preferred when said average intercalary distance between two successive prevailing alignments of individual support structures does not exceed 5 m, preferentially does not exceed 2 m.

It is preferred when at least two of the different individual support structures present top elements at an average height (hₘ) that is bigger than 3 m, being preferred when at least part presents an average height (hₘ) bigger than 4 m.

It is preferred when at least two individual support structures comprise support elements of different individual height so as to vary the average height (hₘ) of respective top elements, and adapted so that the edges of top elements define a variation of height that is smaller than 1 m relative to a respective average height (hₘ) of the top element.

It is preferred when at least two individual support structures comprise a plurality of support elements disposed in a different relative position in relation to the shape of a respective top element, whereby it is preferred when at least part of said support elements develops along an oblique direction along at least part of the average height (hₘ) of the top element.

It is preferred when the variation of area of different top elements corresponds to a value of approximately 1 m to 1,2 m or of approximately 1,5 to 2 m, or to a multiple of these values, along a respective top direction.

According to the invention said individual support structures are not structurally united between each other by any element above ground.

It is preferred when at least some of said individual support structures are provided with common fixations developing at said base level.

Said utility spaces include spaces adjacent to traffic ways, for example a parking area, spaces associated with constructions, for example in the adjacent surroundings, and other, where there is a constrain to the limits of ground area or a reference element for the implantation of individual support structures.

It is preferred when said solar energy disposition is used in a utility space that could be of private use or of public use, eventually confined in terms of property limits, notably with a defined area and shape, such as for example vehicle charging stations, parking areas, urban parks and industrial locations.

Another objective, not part of the present invention is to provide a solar energy system presenting a plurality of types of individual support structures, whereby said individual support structures present at least one support element of pole type or similar, supporting at least one top element of canopy type or similar that presents a plurality of solar energy means, notably solar energy panels or similar, whereby said solar energy system is adapted so that optimizes the constructive simplicity and modularity of said individual support structures, while simultaneously increasing the number of possibilities of spatial distribution of a respective solar energy disposition in a given utility space.

Another objective of the present invention is to provide a solar energy disposition comprising a plurality of individual support structures presenting smaller costs, notably as a result of an optimized behaviour of the ensemble of individual support structures relative to wind loads.

The present invention shall be hereinafter described in greater detail based upon preferred embodiments and the attached figures presenting schematic representations thereof.

The Figures show:
- Figure 1:: top view of a solar energy system (10) of the type of the present invention, but according to prior art;
- Figure 2:: side view of part of a solar energy system (10) according to Figure 1;
- Figure 3:: top view of a first embodiment of a solar energy system (10) according to the present invention;
- Figure 4:: side view of part of the embodiment of a solar energy system (10) according to Figure 3;
- Figure 5:: top view of a second embodiment of a solar energy system (10) according to the present invention;
- Figure 6:: perspective view of part of the embodiment of solar energy system (10) according to Figure 5;
- Figure 7:: top view of a third embodiment of a solar energy system (10) according to the present invention;
- Figure 8:: side view of a first part of the embodiment of solar energy system (10) according to Figure 7;
- Figure 9:: top view of part of the embodiment of a solar energy system (10) according to Figure 7;
- Figure 10:: side view of a second part of the embodiment of solar energy system (10) according to Figure 7;
- Figure 11:: top view along a cut plane at the base level (B) of an embodiment of a solar energy disposition according to the present invention;
- Figure 12:: top view along a cut plane at the base level (B) of an embodiment of a solar energy disposition according to the present invention.

### Detailed description of preferred embodiments of the invention

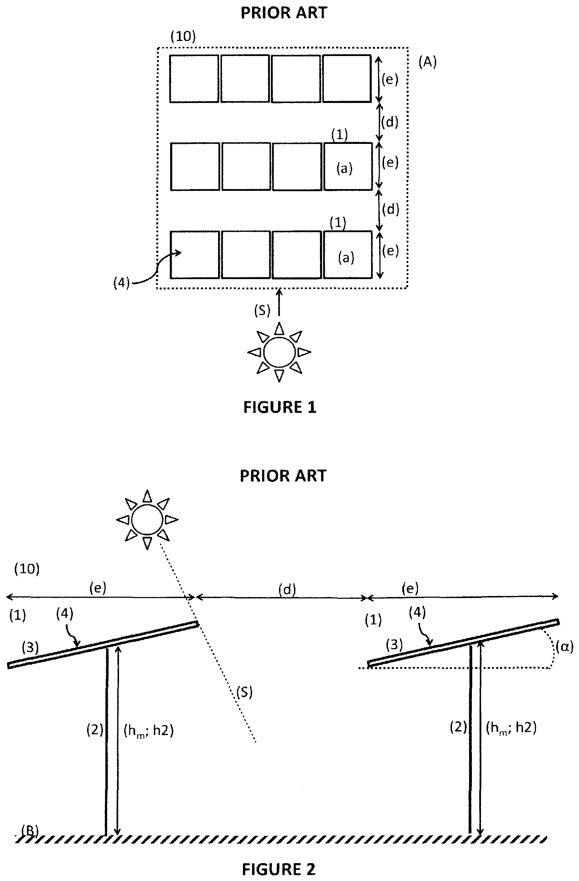

**Figures 1** and **2** correspond to the top and side views of a solar energy system (10) according to prior art and comprising a plurality of individual support structures (1) distributed in a utility space (A), such as for example a parking area.

According to the invention, each individual support structure (1) comprises at least one support element (2), of pole type or similar, supporting at least one top element (3), of canopy type or similar, that presents an area (a) at least at an average height (h) above at least one base level (B) and presenting a plurality of solar energy means (4). Typically, said solar energy means (4) occupy the totality of said area (a), so that the latter results substantially opaque or with a reduced porosity to air circulation, thereby increasing the "lift" and "drag" forces resulting from the action of the wind thereupon and, therefore, respective structural costs.

As known in prior art, said top elements (3) present a generally trapezoidal or rectangular shape that develops along a first and second direction, and a plurality of solar energy means (4). Moreover, as further known, said individual support structures (1) present top elements (3) with a typically similar area (a) and distributed in a matrix-like manner, along successive prevailing alignments of individual support structures (1) distanced from each other by a similar intercalary distance (d). Moreover, said intercalary distance (d) is typically similar to the extension (e) of the top elements (3) along said spatial direction.

In the case that the prevailing solar direction (S) at the site is substantially orthogonal to said prevailing alignments of individual support structures (1), then the top elements (3) of said individual support structures (1) are typically disposed with a similar inclination in at least one angle alpha relative to a horizontal plane.

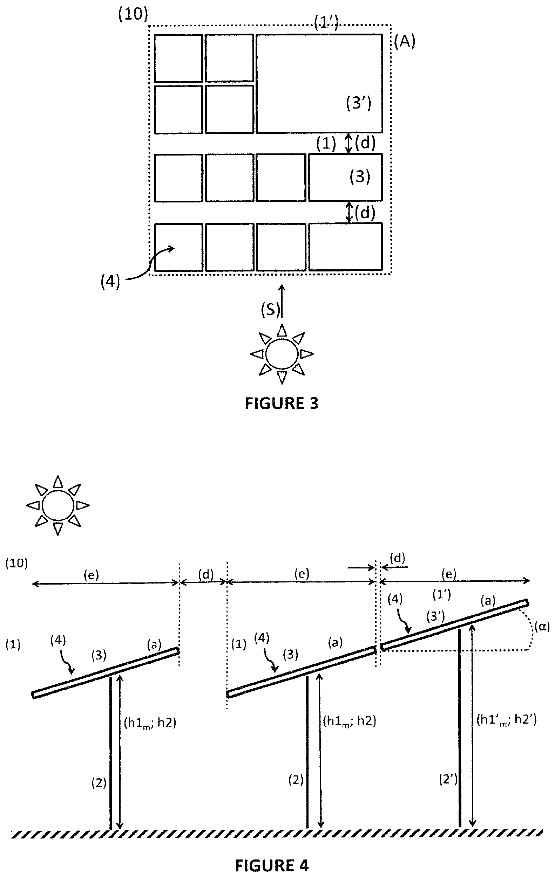

**Figure 3** shows a top view of a first embodiment of a solar energy system (10) according to the present invention, provided in a utility space (A), such as for example a parking area.

As one can observe, a plurality of individual support structures (1) is likewise provided in prevailing spatial directions in a general matrix-like distribution, but in this case, according to an inventive aspect, there is a variation of the intercalary distance (d) between at least two individual support structures (1) along a spatial direction, in this case notably along locally prevailing solar direction (S). In particular, the intercalary distance (d) between the second and third lines of individual support structures (1) is bigger than the distance (d) between the third and fourth lines of individual support structures (1).

Moreover, according to another inventive aspect, the area (a) of the top elements (3) also varies. In particular, as represented, said area (a) varies along at least one, preferentially along at least two extensions of at least two top elements (3, 3').

This variation of the intercalary distance (d) and of the areas (a) of top elements (3) of said system (10) advantageously provides that a greater occupation rate of a given utility space (A) can be attained as a function of the available shape and dimensions therein, in particular such that there is provided a total area of top elements (3) corresponding to at least 70%, preferentially at least 80%, of the area effectively available for solar energy on said utility space (A).

**Figure 4** shows a side view of part of the system (10) represented in Figure 3.

As can be observed, according to a first inventive aspect, the average height (hₘ) of top elements (3) along a spatial direction varies in such a way that the height of a first edge of a second top element (3') is at least similar, preferentially bigger, than the height of a second edge of a first top element (3) along said spatial direction. In the case of this embodiment, the average height (hₘ) is such that the respective top elements (3, 3') present a similar inclination angle (alpha).

According to another inventive aspect, the average intercalary distance (d) between top elements (3) of successive individual support structures (1) does not exceed 50%, preferentially does not exceed 30%, of the bigger of the extensions (e) of said top elements (3, 3') along said spatial direction. In particular, said variation of average intercalary distance (d) between top elements (3, 3') along a spatial direction, is smaller than 20%, preferentially smaller than 10% the smaller of the extensions (e) of said top elements (3, 3') along said spatial direction, in particular along a prevailing solar direction (S).

This disposition increases the occupation rate of a given utility space (A), and reduces the porosity of the ensemble of individual support structures (1) thereby improving their behaviour relative to wind loads.

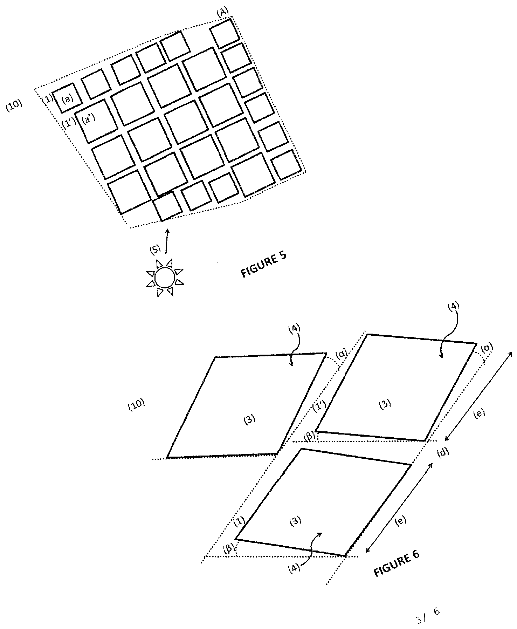

**Figure 5** shows a second embodiment of a system (10) according to the present invention, provided in a utility space (A).

According to a preferred embodiment, the intercalary distance between two prevailing alignments of successive individual support structures (1) developing along a spatial direction, is of at most 3 m, preferentially at most 2 m.

Moreover, according to another preferred embodiment, at least two individual support structures (1, 1') present different areas (a, a') of respective top elements (3).

**Figure 6** presents a perspective view of the top elements (3) only of three individual support structures (1) of a system (10) according to the present invention.

As represented, according to another inventive aspect, said top elements (3, 3') differ in at least one, preferentially in both of the inclination angles (alpha, beta) along respective top directions and relative to a horizontal plane.

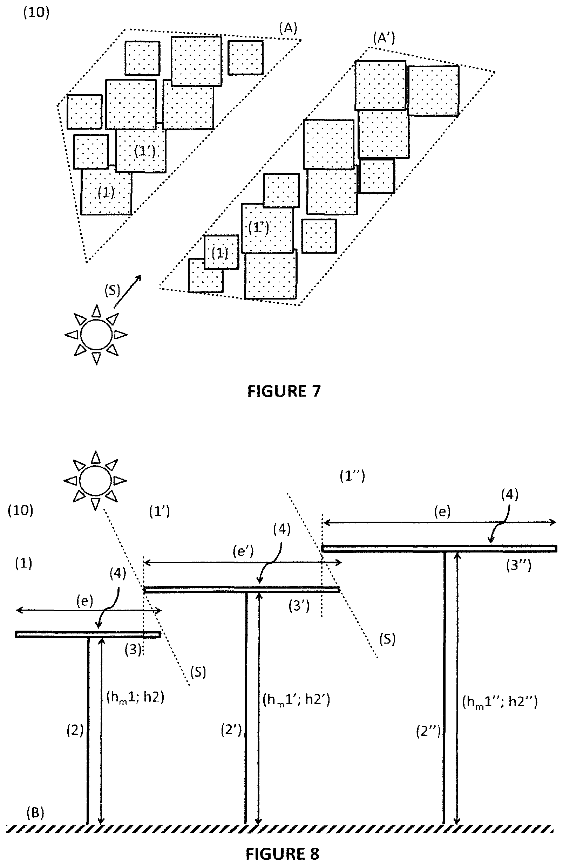

**Figures 7** and **8** show a top view of an embodiment of the system (10) according to the present invention, whereby the utility spaces (A, A') in this case corresponds to two elongated strips of non-rectangular shape.

As one can observe, there is provided a plurality of individual support structures (1) disposed in irregular manner in a plurality of non-orthogonal alignments. The top elements (3) present different areas (a) and different average heights (h), whereby, according to another aspect of the present invention, in at least some cases the vertical projection of a first top element (3') provided higher, intersects a second top element (3).

In fact, and as better represented in Figure 8, some of the individual support structures (1) present different average heights (hₘ) and distances (d) in-between so that the vertical projection of respective top elements (3) intersects in such a way that there is minimized the shadowing projection of one upon the other in the course of an annual period.

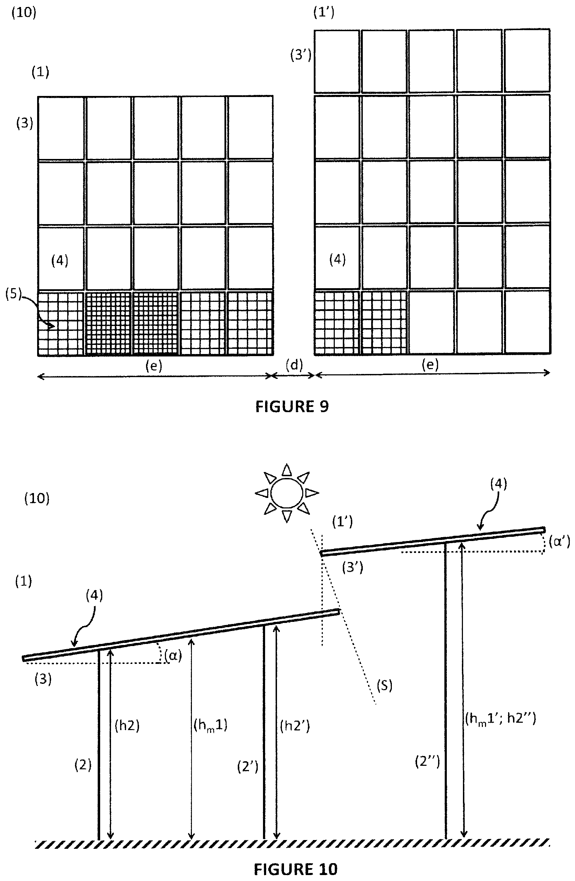

**Figure 9** represents a top view upon two individual support structures (1) of another embodiment of a system (10) according to the present invention.

As represented, the respective top elements (3, 3') present different areas (a). In particular, according to a preferred embodiment, said variation of the area (a) of the top elements (3, 3') along at least one spatial direction, corresponds to the variation of at least one, preferentially both of the extensions (e) of the top elements (3, 3') by a value of 1 m to 1,2 m, or of approximately 1,5 to 2 m, or multiple of one of these values, along said spatial direction. This embodiment advantageously enables modularly varying the area (a) with a reduced module dimension, in particular corresponding to the dimension of a row of solar energy means (4), thereby enabling better adjusting the dimension of the individual support structures (1) to the shape and dimensions available in a given utility space (A).

Moreover, said top elements (3) present more than one solar energy module (4) along a prevailing solar direction (S), and each of the top elements (3) presents a plurality of solar energy means (4), preferentially arranged in a matrix-like distribution, or similar, preferentially in a substantially common spatial orientation.

As also represented, according to another inventive aspect, the individual support structures (1, 1') present a different porosity. That is, present a different area of air passageways and/or a different distribution of those air passageways through a respective top element (3).

According to another preferred embodiment, said variation of porosity of the top elements (3) is provided by a different number of solar energy means (4) by unit area of said area (a), by non placing said solar energy means (4) or by a different distance between clusters of said solar energy means (4) along at least one direction. This embodiment advantageously enables adjusting the conditions of structural resistance of the top element (3) to wind loads, in particular in the case of top elements (3) with areas (a) bigger than 20 m², and adjusting the shadowing and natural lighting conditions provided thereunder.

**Figure 10** represents a side view of a part of another embodiment of a system (10) according to the present invention.

According to another preferred embodiment, at least two individual structures (3, 3') differ in the number and/or in the relative disposition of the support elements (2) relative to a respective top element (3).

Moreover, in the case of individual support structures (1) comprising top elements (3) of bigger average height (hₘ), in particular with an average height (hₘ) that is bigger than 3 m, the top elements (3) being provided with smaller inclination angles (alpha, beta) relative to a horizontal plane.

According to another preferred embodiment, in the case of individual support structures (1) comprising top element (3) presenting areas (a) bigger than 20 m², preferentially bigger than 25 m², then said individual support structures (1) present at least one support element (2) comprising at least three support members (21, 22, 23) disposed in relative proximity along at least part of their extension and diverging along the remanding part.

According to another preferred embodiment, in the case of individual support structures (1) comprising top elements (3) that present inclination angles (alpha, beta) bigger than 8°, preferentially bigger than 10°, then said individual support structures (1) present at least three support elements (2), whereby each support element (2) preferentially comprises at least three support members (21, 22, 23) disposed in relative proximity along at least part of their extension and diverging in the remanding part.

In the case represented in Figure 10, a first individual support structure (1) with a top element (3) of bigger area (a) and bigger inclination (alpha) in a top direction, presents four support elements (2) corresponding to a pergola-like arrangement, and a second individual support structure (1) with a top element (3') of smaller area (a) presents a support element (2) that comprises three support elements (21, 22, 23) provided in relative proximity along a first part attached to the base level (B) and diverging along a second part that support the top element (3').

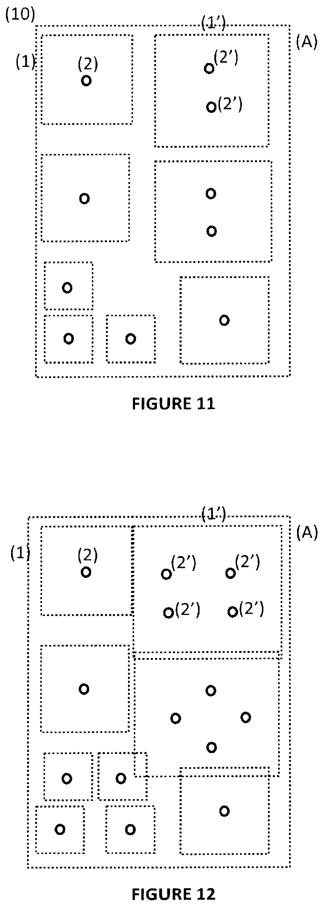

**Figures 11** and **12** represent top views in a cut plane at the base level (B), identifying the relative position of the bottom regions of said support elements (2), as well as the vertical projection of the top elements (3) of respective individual support structures (1, 1').

## Claims

1. **Solar energy disposition** comprising a utility space (A) with a plurality of individual support structures (1),
whereby said individual support structures (1) are not structurally united between each other by any element above ground,
whereby each said individual support structure (1) comprises at least one support element (2), of a pole type, said support elements (2) being at a base level (B) of said utility space (A) and adapted so as to support one top element (3), of canopy type, at an average height (hₘ) above the base level (B),
whereby said top elements (3) present a general form that develops in at least two extensions (e) along at least a first and a second top direction, thereby defining an area (a),
whereby said top elements (3) develop at a top edge level of said support elements (2), or at a higher level,
whereby said top elements (3) present a plurality of solar radiation means (4) occupying at least part of the area (a) of a respective top element (3),
whereby said individual support structures (1) are disposed in the utility space (A) in a form of at least two prevailing alignments each defined by at least two successive individual support structures (1),
whereby a maximum intercalary distance between two prevailing alignments of individual support structures (1) does not exceed 100%, preferentially does not exceed 50%, particularly preferentially does not exceed 30%, of the smaller of the extensions (e) of top elements (3, 3') of respective individual support structures (1), whereby the total area of the top elements (3) provided in at least two successive prevailing alignments of individual support structures (1) is bigger than the total area of the utility space (A) comprising said prevailing alignments of individual support structures (1); and/or
whereby said individual support structures (1) are disposed in the utility space (A) in a form of at least one cluster including at least three neighbouring individual support structures (1),
whereby said solar energy disposition in a form of at least one cluster presents at least one of:
- the total area of solar radiation means (4) provided by at least two neighbouring individual support structures (1), is bigger than the total area at the base level (B) confining the vertical projection of respective top elements (3);
- at least two of said individual support structures (1, 1') present an average intercalary distance (d) between top elements (3, 3') along a spatial direction, that corresponds to a partial superposition of the vertical projection of a first top element (3) by the vertical projection of a second top element (3');
- at least two of said individual support structures (1, 1') differ in
the inclination angles (alpha, beta) of respective top elements (3, 3') along a respective top direction relative to a horizontal plane, whereby said inclination angles (alpha, beta) are smaller than 30°, preferentially smaller than 15°, particularly preferentially smaller than 10°, whereby in at least some cases the vertical projection of a first top element (3) provided higher, intersects a second top element (3);
so as to better adapt the total area with solar exposition provided by said individual support structures (1) and distribution thereof, to the dimension and shape of at least part of said utility space (A), and thereby improve the associated solar energy generation and shadowing conditions.

2. Disposition according to claim 1, **characterized in that** said individual support structures (1) are disposed in prevailing alignments of at least two neighbouring individual support structures (1), along at least one of substantially straight and curved directions, and in at least one of intersecting and parallel directions, and in at least one of constant and variable distance between support elements (2) of a same alignment.

3. Disposition according to claim 1 or 2, **characterized in that** at least two of said individual support structures (1) differ in at least one, preferentially in at least two, of:
- at least one of configuration and spatial distribution of said support elements (2), whereby at least part of the extension of at least one of said support elements (2) is preferentially provided oblique relative to the vertical direction;
- area (a) of respective top elements (3, 3'), whereby the extensions (e) of said top elements (3, 3'), along said first and second top directions, present a relation of at most 2:1, preferentially at most 1,5:1, and whereby said area (a) preferentially varies as a result of the variation of the two extensions (e) of said top elements (3, 3');
- number of said support elements (2) per each top element (3), whereby said number can vary between one and sixteen;
- number of top elements (3) per respective set of support elements (2), whereby said number can vary between one and four.

4. Disposition according to claims 1 to 3, **characterized in that** the total area of the top elements (3) provided by all individual support structures (1) in said utility space (A) is preferentially of at least 80%, more preferentially at least 90%, particularly preferentially bigger than the area available for solar energy generation, including with solar exposition, in said utility space (A).

5. Disposition according to any of previous claims 1 to 4, **characterized in that** at least two of said individual support structures (1, 1') differ in the average height (hₘ) of the top elements (3, 3'), whereby a first edge of a top element (3') of a second individual support structure (1) is provided at a bigger height than the height of a second edge of a top element (3) of a first individual support structure (1), at least along a prevailing solar direction, wherein said variation of average height (hₘ) of top elements (3, 3') at least corresponds to the variation of height necessary so as to minimize the amount of solar energy corresponding to the extension of shadowing projected upon a first top element (3) by a second top element (3') during a year, in particular along a prevailing solar direction (S) at the location, whereby said variation of average height (hₘ) of successive top elements (3, 3') is preferentially smaller than 3 m, preferentially smaller than 2 m.

6. Disposition according to any of previous claims 1 to 5, **characterized in that** a variation of average intercalary distance (d) between top elements (3, 3') along a spatial direction, is smaller than 20%, preferentially smaller than 10% of the smaller of the extensions (e) of said top elements (3, 3') along said spatial direction, in particular along a prevailing solar direction (S).

7. Disposition according to any of previous claims 1 to 6, **characterized in that** said average intercalary distance (d) between top elements (3, 3') along a spatial direction, includes an intersection of the vertical projection of a first top element (3) by the vertical projection of a first edge of a second top element (3'), in particular along a prevailing solar direction (S).

8. Disposition according to any of previous claims, **characterized in that** said variation of the inclination angles (alpha, beta) of the top elements (3, 3') along at least one top direction, corresponds to a variation smaller than 15°, particularly preferentially smaller than 10°, between the planes of said top elements (3, 3').

9. Disposition according to any of previous claims, **characterized in that** the location of placement of said support elements (2) of individual support structures (1) adjacent at the base level (B), configure an irregular matrix, with at least one of different alignment and different distance between support elements (2) of a first and of a second individual support structure (1), along at least one, preferentially along two spatial directions.

10. Disposition according to any of previous claims, **characterized in that** at least two of the neighbouring top elements (3, 3') present areas (a) that differ in at least about 20% and at most about 200%, preferentially at most 100%, particularly preferentially at most 50%, whereby said areas (a) present dimensions between at least about 20 m², preferentially at least about 25 m², and at most about 130 m², preferentially at most about 100 m², and **in that** the extensions (e) of said top elements (3, 3') along said first and second top directions, present a relation of at most 2:1, preferentially at most 1,5:1, particularly preferentially are substantially similar.

11. Disposition according to any of previous claims, **characterized in that** said top elements (3) present a plurality of solar radiation means (4) disposed in a matrix-like distribution, whereby said solar radiation means (4) include at least one of solar radiation conversion means, including in electric or thermal energy, and solar radiation transmission means adapted so as to provide air circulation through said top elements (3).

## Patentansprüche

1. Solarenergieanordnung bestehend aus einem Nutzraum (A) mit einer Vielzahl einzelnen Stützstrukturen (1),
wobei die genannte einzelnen Stützstrukturen (1) nicht durch oberirdische Elemente strukturell miteinander verbunden sind,
wobei jede genannte einzelne Stützstruktur (1) mindestens ein mastartiges Stützelement (2) umfasst, wobei die genannte Stützelemente (2) sich auf einer Grundebene (B) des Nutzraums (A) befinden und ein überdachungsartiges Aufsatzelement (3) in einer mittleren Höhe (hₘ) über der Grundebene (B) tragen, wobei die genannte Aufsatzelemente (3) eine allgemeine Form aufweisen, die sich in mindestens zwei Verlängerungen (e) in mindestens einer ersten und einer zweiten oberen Richtung erstreckt und so eine Fläche (a) definiert,
wobei die genannte Aufsatzelemente (3) sich auf Höhe des oberen Endes der Stützelemente (2) oder auf einer höheren Ebene erstrecken,
wobei die genannte Aufsatzelemente (3) mehrere Solarstrahlungsmittel (4) aufweisen, die mindestens einen Teil der Fläche (a) eines jeweiligen Aufsatzelements (3) einnehmen,
wobei die genannte einzelnen Stützstrukturen (1) im Nutzraum (A) in Form von mindestens zwei vorherrschenden Ausrichtungen angeordnet sind, die jeweils durch mindestens zwei aufeinanderfolgende einzelne Stützstrukturen (1) definiert sind, wobei ein maximaler Abstand zwischen zwei Ausrichtungen einzelner Stützstrukturen (1) 100%, vorzugsweise 50% und besonders bevorzugt 30% der kleineren Ausdehnung (e) der Aufsatzelemente (3, 3') der jeweiligen einzelnen Stützstrukturen (1) nicht überschreitet;
wobei die Gesamtfläche der in mindestens zwei aufeinanderfolgenden vorherrschenden Ausrichtungen einzelner Stützstrukturen (1) vorgesehenen Aufsatzelemente (3) größer ist als die Gesamtfläche des Nutzraums (A) der die genannten vorherrschenden Ausrichtungen einzelner Stützstrukturen (1) umfasst; und/oder wobei die einzelnen Stützstrukturen (1) im Nutzraum (A) in Form mindestens eines Clusters mit mindestens drei benachbarten einzelnen Stützstrukturen (1) angeordnet sind,
wobei die genannte Solarenergieanordnung in Form mindestens eines Clusters mindestens eines der folgenden Merkmale aufweist:
- die Gesamtfläche der von mindestens zwei benachbarten einzelnen Stützstrukturen (1) bereitgestellten Solarstrahlungsmedien (4) ist größer als die Gesamtfläche auf Basisebene (B), die die vertikale Projektion ihrer jeweiligen Aufsatzelemente (3) begrenzt;
- mindestens zwei der genannten einzelnen Stützstrukturen (1, 1') weisen einen durchschnittlichen Abstand (d) zwischen den Aufsatzelementen (3, 3') entlang einer Raumrichtung auf, der einer teilweisen Überlappung der vertikalen Projektion eines ersten Aufsatzelements (3) durch die vertikale Projektion eines zweiten Aufsatzelements (3') entspricht;
- mindestens zwei der genannten einzelnen Stützstrukturen (1, 1') unterscheiden sich in den Neigungswinkeln (Alpha, Beta) ihrer jeweiligen Aufsatzelemente (3, 3') in jeweiliger Aufsatzrichtung relativ zu einer Horizontalebene, wobei die Neigungswinkel (Alpha, Beta) kleiner als 30°, vorzugsweise kleiner als 15° und besonders bevorzugt kleiner als 10° sind, wobei zumindest teilweise die vertikale Projektion eines höher angeordneten ersten Aufsatzelements (3) die eines zweiten Aufsatzelements (3) schneidet;
um die Gesamtfläche der genannten einzelnen Stützstrukturen (1) und ihre Verteilung mit Sonneneinstrahlung besser an die Größe und Form zumindest eines Teils der Nutzfläche (A) anzupassen und dadurch die Bedingungen für die Solarenergieerzeugung und die damit verbundene Beschattung zu verbessern.

2. Anordnung nach Anspruch 1, **dadurch gekennzeichnet dass** die einzelnen Stützstrukturen (1) in überwiegenden Fluchten von mindestens zwei benachbarten einzelnen Stützstrukturen (1) angeordnet sind, und zwar in im Wesentlichen geraden und/oder gekrümmten Richtungen und/oder in sich kreuzenden und/oder parallelen Richtungen und mit einem konstanten und/oder variablen Abstand zwischen Stützelementen (2) gleicher Flucht.

3. Anordnung nach Anspruch 1 oder 2, **dadurch gekennzeichnet dass** sich mindestens zwei der einzelnen Stützstrukturen (1) in mindestens einem, vorzugsweise mindestens zwei der folgenden Punkte unterscheiden:
- mindestens eine Konfiguration und räumliche Anordnung der Stützelemente (2), wobei mindestens ein Teil der Erstreckung mindestens eines der Stützelemente (2) vorzugsweise schräg zur Vertikalen verläuft;
- Fläche (a) der jeweiligen Aufsatzelemente (3, 3'), wobei die Erstreckungen (e) der Aufsatzelemente (3, 3') in der ersten und zweiten Aufsatzrichtung ein Verhältnis von höchstens 2:1, vorzugsweise höchstens 1,5:1 aufweisen und die Fläche (a) vorzugsweise durch die Variation der beiden Erstreckungen (e) der Aufsatzelemente (3, 3') variiert;
- Anzahl der Stützelemente (2) für jedes Aufsatzelement (3), wobei diese Anzahl zwischen eins und sechzehn variiert;
- Anzahl der Aufsatzelemente (3) für jeden jeweiligen Satz von Stützelementen (2), wobei diese Anzahl zwischen eins und vier variiert.

4. Anordnung nach den Ansprüchen 1 bis 3, **dadurch gekennzeichnet dass** die Gesamtfläche der durch alle einzelnen Stützstrukturen (1) bereitgestellten Aufsatzelemente (3) im Nutzraum (A) vorzugsweise mindestens 80%, bevorzugt mindestens 90%, besonders bevorzugt gleich oder größer ist als die zur Solarenergiegewinnung, auch bei Sonneneinstrahlung, im Nutzraum (A) zur Verfügung stehende Fläche.

5. Anordnung nach einem der vorhergehenden Ansprüche 1 bis 4, **dadurch gekennzeichnet dass** sich mindestens zwei der einzelnen Stützstrukturen (1, 1') in der durchschnittlichen Höhe (hₘ) der Aufsatzelemente (3, 3') unterscheiden, wobei ein erstes Ende eines Aufsatzelements (3') einer zweiten einzelnen Stützstruktur (1) zumindest entlang einer vorherrschenden Sonnenrichtung auf einer höheren Höhe vorgesehen ist als die Höhe eines zweiten Endes eines Aufsatzelements (3) einer ersten einzelnen Stützstruktur (1), wobei die Variation der durchschnittlichen Höhen (hₘ) der Aufsatzelemente (3, 3') mindestens der Höhenvariation entspricht, die notwendig ist, um die Menge an Sonnenenergie zu minimieren, die dem Ausmaß der Beschattung entspricht, die im Laufe eines Jahres von einem zweiten Aufsatzelement (3') auf ein erstes Aufsatzelement (3) projiziert wird, insbesondere entlang einer vorherrschenden Sonnenrichtung (S) am Standort, wobei die Variation der durchschnittlichen Höhen (hₘ) aufeinanderfolgender Aufsatzelemente (3, 3') vorzugsweise kleiner als 3 m, vorzugsweise kleiner als 2 m ist.

6. Anordnung nach einem der vorhergehenden Ansprüche 1 bis 5, **dadurch gekennzeichnet dass** die Variation des mittleren Zwischenabstands (d) zwischen Aufsatzelementen (3, 3') entlang einer Raumrichtung weniger als 20%, vorzugsweise weniger als 10% der kleinsten Ausdehnung (e) der Aufsatzelemente (3, 3') entlang dieser Raumrichtung, insbesondere entlang einer vorherrschenden Sonnenrichtung (S), beträgt.

7. Anordnung nach einem der vorhergehenden Ansprüche 1 bis 6, **dadurch gekennzeichnet dass** der durchschnittliche Zwischenabstand (d) zwischen den Aufsatzelementen (3, 3') in einer Raumrichtung eine Überschneidung der vertikalen Projektion eines ersten Aufsatzelements (3) mit der vertikalen Projektion eines ersten Endes eines zweiten Aufsatzelements (3') umfasst, insbesondere in einer vorherrschenden Sonnenrichtung (S).

8. Anordnung nach einem der vorhergehenden Ansprüche, **dadurch gekennzeichnet dass** die Variation der Winkel (Alpha, Beta) der Aufsatzelemente (3, 3') entlang mindestens einer oberen Richtung einer Variation von weniger als 15°, besonders bevorzugt weniger als 10°, zwischen den Ebenen der Aufsatzelemente (3, 3') entspricht.

9. Anordnung nach einem der vorhergehenden Ansprüche, **dadurch gekennzeichnet dass** die Anordnung der Stützelemente (2) benachbarter Einzelstützstrukturen (1) angrenzend an die Basisebene (B) eine unregelmäßige Matrix bildet, mit mindestens einer unterschiedlichen Ausrichtung und unterschiedlichem Abstand zwischen Stützelementen (2) einer ersten und einer zweiten Einzelstützstruktur (1) in mindestens einer, vorzugsweise zwei, Raumrichtungen.

10. Anordnung nach einem der vorhergehenden Ansprüche, **dadurch gekennzeichnet dass** mindestens zwei der benachbarten Aufsatzelemente (3, 3') Flächen (a) aufweisen, die sich um mindestens etwa 20% und höchstens etwa 200%, vorzugsweise höchstens 100%, besonders bevorzugt höchstens 50% unterscheiden, wobei die Flächen (a) Abmessungen zwischen mindestens etwa 20 m², vorzugsweise mindestens etwa 25 m² und höchstens etwa 130 m², vorzugsweise höchstens etwa 100 m² aufweisen, und dass die Ausdehnungen (e) der Aufsatzelemente (3, 3') in der ersten und zweiten Aufsatzrichtung ein Verhältnis von höchstens 2:1, vorzugsweise höchstens 1,5:1 aufweisen, besonders bevorzugt im Wesentlichen ähnlich sind.

11. Anordnung nach einem der vorhergehenden Ansprüche, **dadurch gekennzeichnet dass** die Aufsatzelemente (3) eine Vielzahl von Solarstrahlungsmitteln (4) aufweisen, die in einer matrixartigen Verteilung angeordnet sind, wobei die Solarstrahlungsmittel (4) mindestens eines von Mittel zum Umwandeln von Solarstrahlung, einschließlich in elektrische oder thermische Energie, und Mittel zur Übertragung von Solarstrahlung umfassen, die dazu geeignet sind, eine Luftzirkulation durch die oberen Elemente (3) zu ermöglichen.

## Revendications

1. Agencement d'énergie solaire comprenant un espace utilitaire (A) avec une pluralité des structures de support individuelles (1),
dans lequel lesdites structures de support individuelles (1) ne sont pas reliées structurellement entre elles par aucun élément hors sol,
dans lequel chaque structure de support individuelle (1) comprend au moins un élément de support (2), de type poteau, lesdits éléments de support (2) étant situé à un niveau de base (B) de l'espace utilitaire (A) et conçu pour supporter un élément supérieur (3) de type canopée à une hauteur moyenne (hₘ) au-dessus du niveau de base (B),
dans lequel lesdits éléments supérieurs (3) présentent une forme générale s'étendant en au moins deux extensions (e) dans au moins une première et une seconde direction supérieure, définissant ainsi une aire (a),
dans lequel lesdits éléments supérieurs (3) s'étendent au niveau de l'extrémité supérieure desdits éléments de support (2), ou à un niveau plus élevé,
dans lequel lesdits éléments supérieurs (3) comportent plusieurs moyens de rayonnement solaire (4) occupant au moins une partie de l'aire (a) de chaque élément supérieur (3),
dans lequel les structures de support individuelles (1) sont disposés dans l'espace utilitaire (A) selon au moins deux alignements principaux, chacun défini par au moins deux structures porteuses individuelles (1) successives,
dans lequel l'espace utilitaire (A) est composé d'au moins deux alignements principaux de structures porteuses individuelles (1) dont la distance intercalaire maximale ne dépasse pas 100%, de préférence 50%, et de préférence 30%, de la plus petite extension (e) des éléments supérieurs (3, 3') de ces structures porteuses individuelles (1),
dans lequel la surface totale des éléments supérieurs (3) pourvu par au moins deux alignements principaux de structures porteuses individuelles (1) est supérieure à la surface totale de l'espace utilitaire (A) comprenant lesdits alignements principaux de structures porteuses individuelles (1), et/ou
dans lequel lesdites structures de support individuelles (1) sont disposées dans l'espace utilitaire (A) sous la forme d'au moins un groupe comprenant au moins trois structures de support individuelles adjacentes (1),
dans lequel ledit agencement d'énergie solaire sous la forme d'au moins un groupe présentant au moins l'une des caractéristiques suivantes:
- la surface totale des moyens de rayonnement solaire (4) pourvu par au moins deux structures de support individuelles (1) adjacentes est supérieure à la surface totale au niveau de la base (B) qui délimite la projection verticale de leurs respectifs éléments supérieurs (3);
- au moins deux desdites structures de support individuelles (1, 1') présentent une distance intercalaire moyenne (d) entre les éléments supérieurs (3, 3') le long d'une direction spatiale, correspondant à un chevauchement partiel de la projection verticale d'un premier élément supérieur (3) par la projection verticale d'un second élément supérieur (3');
- au moins deux desdites structures de support individuelles (1, 1') présentent des angles d'inclinaison (alpha, bêta) différents de leurs éléments supérieurs respectifs (3, 3') dans une direction supérieure respective par rapport à un plan horizontal, lesdits angles d'inclinaison (alpha, bêta) étant inférieurs à 30°, de préférence inférieurs à 15°, et de préférence inférieurs à 10°, et dans au moins certains cas, la projection verticale d'un premier élément supérieur (3) situé plus haut coupe celle d'un second élément supérieur (3);
afin de mieux adapter la surface totale d'exposition solaire offerte par lesdites structures de support individuelles (1) et leur répartition à la taille et à la forme d'au moins une partie dudit espace utilitaire (A), et ainsi d'améliorer les conditions de production d'énergie solaire et d'ombrage associé.

2. Agencement selon la revendication 1, **caractérisé en ce que** lesdites structures de support individuelles (1) sont disposées dans des alignements dominants d'au moins deux structures de support individuelles (1) voisines, le long d'au moins une direction parmi des directions sensiblement droites et courbes, et dans au moins une direction parmi des directions sécantes et parallèles, et au moins une distance constante et variable entre des éléments de support (2) du même alignement.

3. Agencement selon la revendication 1 ou 2, **caractérisé en ce qu'**au moins deux desdites structures de support individuelles (1) diffèrent par au moins un, de préférence au moins deux, des éléments suivants:
- au moins une configuration et une disposition spatiale desdits éléments de support (2), au moins une partie de l'extension d'au moins un desdits éléments de support (2) étant de préférence disposée obliquement par rapport à la direction verticale;
- l'aire (a) des éléments supérieurs respectifs (3, 3'), les extensions (e) desdits éléments supérieurs (3, 3'), selon lesdites première et seconde directions supérieures, présentant un rapport d'au plus 2:1, de préférence d'au plus 1,5:1, et ladite aire (a) variant de préférence en fonction de la variation des deux extensions (e) desdits éléments supérieurs (3, 3');
- le nombre d'éléments de support (2) pour chaque élément supérieur (3), ce nombre variant de un à seize;
- le nombre d'éléments supérieurs (3) pour chaque ensemble respectif d'éléments de support (2), ce nombre variant de un à quatre.

4. Agencement selon les revendications 1 à 3, **caractérisé en ce que** la surface totale des éléments supérieurs (3) pourvu par toutes les structures de support individuelles (1) dans ledit espace utilitaire (A) est de préférence d'au moins 80 %, de préférence d'au moins 90 %, de manière particulièrement préférée similaire ou supérieure à la surface disponible pour la production d'énergie solaire, y compris avec exposition solaire, dans ledit espace utilitaire (A).

5. Agencement selon l'une quelconque des revendications 1 à 4, **caractérisé en ce qu'**au moins deux desdites structures de support individuelles (1, 1') diffèrent par la hauteur moyenne (hₘ) des éléments supérieurs (3, 3'), dans lequel une première extrémité d'un élément supérieur (3') d'une seconde structure de support individuelle (1) est prévue à une hauteur supérieure à la hauteur d'une seconde extrémité d'un élément supérieur (3) d'une première structure de support individuelle (1), au moins selon une direction solaire dominante, dans lequel la variation de hauteur moyenne (hₘ) des éléments supérieurs (3, 3') correspond au moins à la variation de hauteur nécessaire pour minimiser la quantité d'énergie solaire correspondant à l'ampleur de l'ombrage projeté sur un premier élément supérieur (3) par un second élément supérieur (3') au cours d'une année, en particulier selon une direction solaire dominante (S) sur le site, dans lequel la variation de hauteur moyenne (hₘ) des éléments supérieurs successifs (3, 3') est de préférence inférieure à 3 m, de préférence inférieure à 2 m.

6. Agencement selon l'une quelconque des revendications 1 à 5 précédentes, **caractérisé en ce que** ladite variation de la distance intercalaire moyenne (d) entre éléments supérieurs (3, 3') le long d'une direction spatiale est inférieure à 20%, de préférence inférieure à 10% de la plus petite des extensions (e) desdits éléments supérieurs (3, 3') le long de ladite direction spatiale, en particulier le long d'une direction solaire dominante (S).

7. Agencement selon l'une quelconque des revendications 1 à 6 précédentes, **caractérisé en ce que** ladite distance intercalaire moyenne (d) entre éléments supérieurs (3, 3') selon une direction spatiale comprend une intersection de la projection verticale d'un premier élément supérieur (3) avec la projection verticale d'une première extrémité d'un deuxième élément supérieur (3'), notamment selon une direction solaire dominante (S).

8. Agencement selon l'une quelconque des revendications précédentes, **caractérisé en ce que** ladite variation des angles (alpha, bêta) des éléments supérieurs (3, 3') selon au moins une direction supérieure correspond à une variation inférieure à 15°, de préférence inférieure à 10°, entre les plans desdits éléments supérieurs (3, 3').

9. Agencement selon l'une quelconque des revendications précédentes, **caractérisé en ce que** l'emplacement de placement desdits éléments de support (2) des structures de support individuelles (1) adjacentes au niveau de base (B) forme une matrice irrégulière, avec au moins un alignement différent et une distance différente entre les éléments de support (2) d'une première et d'une seconde structure de support individuelle (1), dans au moins une, de préférence deux, directions spatiales.

10. Agencement selon l'une quelconque des revendications précédentes, **caractérisé en ce qu'**au moins deux des éléments supérieurs voisins (3, 3') présentent des aires (a) qui diffèrent d'au moins environ 20% et d'au plus environ 200%, de préférence d'au plus 100%, de manière particulièrement préférée d'au plus 50%, lesdites aires (a) présentant des dimensions comprises entre au moins environ 20 m², de préférence au moins environ 25 m², et au plus environ 130 m², de préférence au plus environ 100 m², et **en ce que** les extensions (e) desdits éléments supérieurs (3, 3') dans lesdites première et seconde directions supérieures présentent un rapport d'au plus 2:1, de préférence d'au plus 1,5:1, de manière particulièrement préférée sont substantiellement similaires.

11. Agencement selon l'une quelconque des revendications précédentes, **caractérisé en ce que** lesdits éléments supérieurs (3) présentent une pluralité de moyens de rayonnement solaire (4) disposés selon une distribution matricielle, lesdits moyens de rayonnement solaire (4) comprenant au moins un de moyens de conversion du rayonnement solaire, notamment en énergie électrique ou thermique, et moyens de transmission du rayonnement solaire adaptés pour assurer une circulation d'air à travers les éléments supérieurs (3).
